# EUROPEAN PATENT APPLICATION

(11) **EP 2 164 273 A1**
(43) Date of publication of application: **17.03.2010**
(21) Application number: 08700056.8
(22) Date of filing: 04.01.2008
(51) Int. Cl.: H04Q 7/22

(54) **METHOD, SYSTEM AND DEVICE OF MULTICAST RESOURCE CONTROL**

(30) Priority: 30.04.2007 CN 200710101578
(71) Applicant: Huawei Technologies Co., Ltd., Longgang District, Shenzhen Guangdong 518129 (CN)
(72) Inventor: HUANG, Shibi, Shenzhen, Guangdong 518129 (CN); ZUO, Yu, Shenzhen, Guangdong 518129 (CN); ZHU, Ning, Shenzhen, Guangdong 518129 (CN)
(74) Representative: Pfenning, Meinig & Partner GbR
(86) International application number: PCT/CN2008/070030
(87) International publication number: WO 2008/131651

(57) **Abstract**

A method, a system, and an apparatus for controlling multicast bearer resources are disclosed. The method includes: a network entity in the RACS receives a request of controlling a multicast bearer resource and controls the multicast bearer resource according to the request. The method, the system and the apparatus disclosed herein can control the multicast bearer resource in the NGN.

## Description

### FIELD OF THE TECHNOLOGY

The present disclosure relates to the Next-Generation Network (NGN) technology, and in particular, to a method, a system, and an apparatus for controlling multicast bearer resources in an NGN.

### BACKGROUND

The Internet Protocol Television (IPTV) service is based on an Internet Protocol (IP) network and is primarily in the form of stream media. Compared with the traditional television service, the IPTV service is more diversified and flexible, and is performed on an integrated IPTV Value-Added Service (VAS) platform which implements communication, data, video, audio and other services. The IPTV primarily provides the Live Television (LTV) service and the Video On Demand (VOD) service. The VOD service is characterized by individualization and real-time interaction. As a non-interactive service, the LTV service is passive to the user, and the scope of the contents selected by a user is limited to the provided channels. The technology of transmitting video streams of the VOD service on an IP network is different from the technology of transmitting the video streams of the LTV service on an IP network. The VOD service employs a point-to-point communication mode, but the LTV service employs a point-to-multipoint communication mode, and may be implemented through the multicast technology. The multicast technology uses the network bandwidth efficiently, and avoids waste of bandwidth resources.

Currently, the multicast technology uses the same multicast address to send services, and the sender sends a content to a specified multicast address. The multicast address replicates the content, and sends it to multiple receivers simultaneously, thus reducing the load on the service sender and the transmission network. In order to obtain the content sent from the multicast address, the receiver joins the service multicast group to require the neighboring router to replicate the multicast content and send to itself. A multicast forwarding path is set up between different routers through interaction based on a multicast routing protocol. In this way, the multicast content can be sent from the multicast source to the receiver along the multicast forwarding path.

The NGN is an integrated network based on the packet technology. Primarily based on the packet switching technology, the NGN separates bearer from control, and inherits not only all services of the fixed network, but also the services of the mobile network. The NGN draws upon the merits of the fixed network, the mobile network and the IP network. Analog subscribers, digital subscribers, mobile subscribers, IP subscribers, and the subscribers who access the network through satellite may be users in an NGN and communicate with each other.

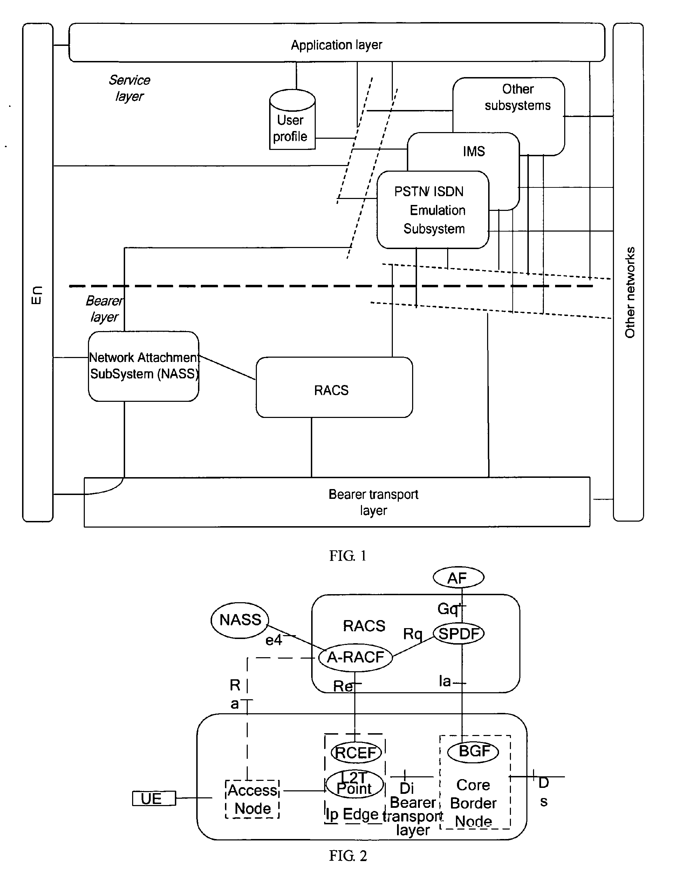

FIG. 1 shows NGN architecture in the prior art. As shown in FIG. 1, the NGN includes a service layer and a bearer layer. The service layer includes an IP Multimedia Subsystem (IMS), a PSTN/IDSN Emulation Subsystem (PES), and user profiles. The bearer layer includes a Resource and Admission Control Subsystem (RACS) and a Network Attachment Subsystem (NASS).

As a subsystem under the NGN standard architecture, the IMS provides integrated system architecture for the fixed softswitch network and the mobile softswitch network, and separates the service layer from the bearer layer. Service providers can foster more new services in such an architecture. The IMS architecture may bear the IPTV service.

Through resource admission control, the RACS transmits network management information to the service layer, supports separation of the service control from the transmission function, perceives the utilization state of resources of the bearer layer, ensures proper use of the bearer layer resources, ensures Quality of Service (QoS), and prevents fraudulent use of bandwidth and services.

FIG. 2 shows function entity architecture of a bearer layer in the prior art. As shown in FIG. 2, the bearer layer includes a RACS, a NASS, and a bearer transport layer.
The RACS includes a Service-based Policy Decision Function (SPDF) and an Access-Resource and Admission Control Function (A-RACF). The bearer transport layer includes a Resource Control Enforcement Function (RCEF) and a Layer-2 Termination Function (L2TF) in an Access Node (AN) and an IP edge node, and includes a Border Gateway Function (BGF) in a core border node.

The SPDF is a unified interface provided for the service layer, and screens off the bearer layer network topology and the specific access type and provides service-based policy control. The SPDF selects a policy according to the request sent by the Application Function (AF) in the service layer, and maps the request to an IP QoS parameter and provides the parameter for the BGF. The request is sent to the A-RACF to request the corresponding resources. The A-RACF is capable of admission and policy convergence. The A-RACF receives the requests from the SPDF, and implements admission control based on the stored policy to accept or reject the request for the bearer resource. The A-RACF obtains the network attachment information and the user QoS list information from the NASS through an e4 interface. Therefore, the A-RACF can determine available network resources according to the network location information (for example, physical address of the accessing user), and draw upon the user QoS list information when handling the request. The A-RACF determines the media stream policy, and provides the policy for the RCEF. The BGF is located between the access network and the core network to implement the core border gateway function, or is located between two core networks to implement the interworking border gateway function. Under control of the SPDF, the BGF implements network address translation, access control, QoS marking, bandwidth restriction, and synchronization of policy and resources. The RCEF implements the layer 2/layer 3 (L2/L3) media stream policy transmitted by the A-RACF through an Re interface, and exercises acc ess control, QoS marking, and bandwidth restriction. L2TF is a function entity that terminates layer-2 connection in the access network.

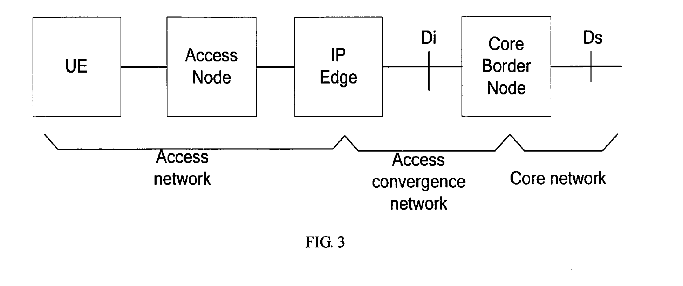

In order to describe the prevent disclosure more clearly, the bearer layer is divided into three segments: access network, access convergence network, and core network, as shown in FIG. 3. The access network covers a scope from the User Equipment (UE) to the IP edge, the access convergence network covers a scope from the IP edge to the core border node, and the part beyond the core border node is called the access network.

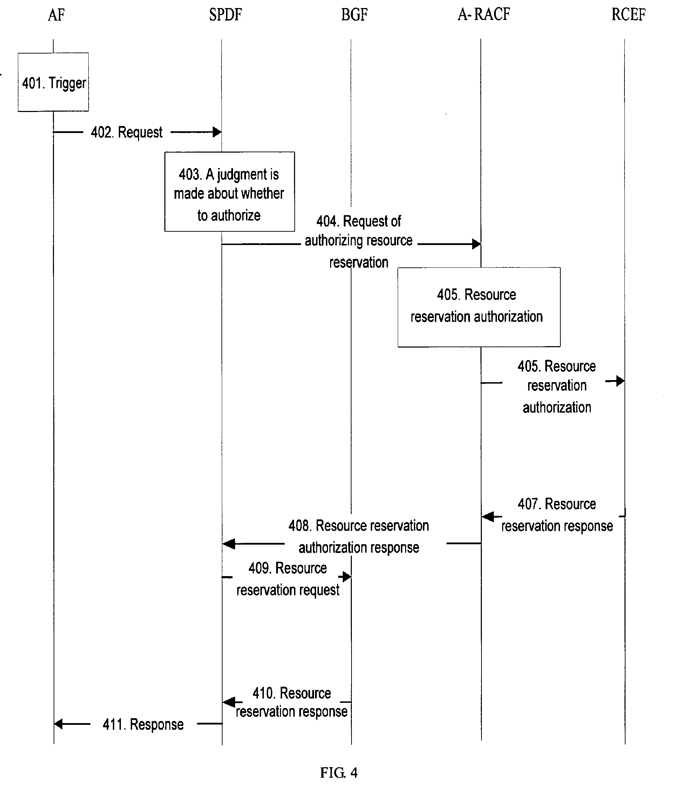

Currently, the process of requesting bearer resources with the unicast technology based on the architecture in FIG. 2 includes the following steps, as shown in FIG. 4:

Step 401: The AF receives session setup negotiation information, and decides that a bearer resource needs to be requested for the session.

Step 402: The AF sends session request-related information to the SPDF. The information includes the descriptive information of the unicast stream that requests the bearer resource, for example, unicast stream quintuple (source IP address, destination IP address, port, and protocol type), and QoS-related parameters such as grade and bandwidth.

Step 403: The SPDF authorizes the bearer resource request, during which the SPDF decides whether the service request of the AF meets the set policy.

Step 404: If the SPDF authorizes the bearer resource successfully, it may be necessary to request the A-RACF to authorize resource reservation and/or instruct the BGF to perform resource reservation.

In this step, the SPDF makes decision according to the policy and the parameter carried in the request sent by the AF. Therefore, depending on the decision of the SPDF, steps 405-408 and/or steps 409-409 may be omissible.

The request of authorizing resource reservation sent by the SPDF to the A-RACF also carries the descriptive information of the unicast stream of the requested resource and the requested QoS parameters.

Step 405: The A-RACF performs resource authorization and admission control based on the policy of the access network. The A-RACF decides whether to deliver policy decision to the RCEF. If the policy decision needs to be delivered, the process proceeds to step 406.

Step 406: The A-RACF instructs the RCEF to exercise the policy on the relevant unicast stream (depending on the decision in step 405). The policy includes the description (a quintuple) about the unicast stream that exercises the unicast stream and the authorized QoS parameters (such as bandwidth), and then the process proceeds to step 407.

Step 407: The RCEF determines the relevant policy rules according to the instruction of the A-RACF, and returns a response to the A-RACF (depending on step 406), and then the process proceeds to step 407.

Step 408: The A-RACF sends a resource authorization response to the SPDF, indicating the result of authorizing the resource reservation.

Step 409: The SPDF determines whether it is necessary to instruct the BGF to reserve resources. If necessary, the SPDF delivers a policy to the BGF. The policy includes the description (a quintuple) about the unicast stream that exercises the policy, and the authorized QoS parameters (such as bandwidth).

Step 410: The BGF executes the policy and reserves the bearer resource, and returns a result of resource reservation to the SPDF.

Step 411: The SPDF sends the result returned in step 408 and/or step 410 to the AF.

As shown in FIG. 4, the architecture shown in FIG. 2 in the prior art is applicable only to the unicast technology, and is not applicable to the multicast technology because:
first, the unicast technology employs the point-to-point communication mode. The switch and/or the router in the network forwards but does not replicate the transmitted data stream. If 10 UEs receive the same data, the server needs to transmit the data stream to the 10 UEs respectively, namely, repeat the same work for 10 times. The multicast technology employs the point-to-multipoint communication mode, and the UEs that need to receive the same data stream join a multicast group and share the data stream provided by the multicast group. In the architecture shown in FIG. 2, resources are reserved for the data streams sent or received by all UEs in the access network or the core network. However, if the UE receives a multicast stream, the core network resource is shared. If the multicast stream is already set up, the architecture shown in FIG. 2 does not need to reserve core network resources; otherwise, resources are wasted;
second, in the multicast technology, the UE needs to send an Internet Group Management Protocol (IGMP) message to the multicast router to join a multicast group. This message is terminated on the first multicast router that receives the message. In FIG. 2, the multicast router corresponds to an IP edge node. That is, in order to exercise admission control over the media stream resource and prevent unauthorized UEs from joining the multicast group, it is necessary to configure an admission policy on the IP edge node for judging whether to allow a UE to join the group.

As analyzed above, the architecture shown in FIG. 2 in the prior art is not capable of exercising admission control over the multicast bearer resource, and is unable to judge whether to admit the multicast stream. However, from the perspective of the trend of the existing IPTV service, the multicast technology will be widely applied on the bearer layer of the network that bears the IPTV service, and the admission control for the multicast stream resources will be linchpin of ensuring the QoS of the IPTV service. Lack of a resource control method for the multicast stream constitutes a bottleneck of developing the IPTV service.

### SUMMARY

A method for controlling multicast bearer resources in an NGN is disclosed in an embodiment of the present disclosure to control multicast bearer resources in the NGN.

A system for controlling multicast bearer resources in an NGN is disclosed in an embodiment of the present disclosure to control multicast bearer resources in the NGN.

An apparatus for controlling multicast bearer resources in an NGN is disclosed in an embodiment of the present disclosure to control multicast bearer resources in the NGN.

In view of the foregoing objectives, the technical solution under the present disclosure is implemented in the following way:

A method for controlling multicast bearer resources is disclosed. The method includes:
receiving, by a network entity in a RACS, a request of controlling a multicast bearer resource; and
controlling the multicast bearer resource according to the request.

A system for controlling multicast bearer resources is disclosed. The system includes:
a network entity in a RACS, adapted to: receive a request of controlling a multicast bearer resource, and control the multicast bearer resource according to the request.

An apparatus for controlling multicast bearer resources is disclosed. The apparatus includes:
a receiving module, adapted to receive a request of controlling a multicast bearer resource; and
a multicast resource processing module, adapted to control the multicast bearer resource according to the received control request.

To sum up, the capabilities of the SPDF and the A-RACF on the bearer layer are extended herein so that the SPDF and the A-RACF may control the multicast bearer resource to be processed according to the request of applying for, modifying or releasing the multicast bearer resources, and generate a multicast stream bearer policy. The policy is adapted to control the transport layer to exercise resource reservation control, bandwidth restriction control, resource activation control, access authorization control, or any combination thereof, over the multicast bearer resources of the multicast stream. In addition, the capabilities of the BGF and the RCEF on the bearer layer are extended herein so that the BGF and the RCEF can exercise resource reservation control, bandwidth restriction control, resource activation control, access authorization control, or any combination thereof, over the multicast bearer resources of the multicast stream according to the multicast stream control policy delivered by the SPDF or A-RACF. Therefore, the method, the system and the apparatus provided herein can control the multicast bearer resources in the NGN.

### BRIEF DESCRIPTION OF THE DRAWINGS

FIG. 1 shows architecture of an NGN in the prior art;

FIG. 2 shows function entity architecture of a bearer layer in the prior art;

FIG. 3 shows division of a bearer layer in an NGN;

FIG. 4 is a flowchart of a method for requesting bearer resources with a unicast technology based on the architecture in FIG. 2 in the prior art;

FIG. 5 shows a system for controlling multicast bearer resources in an NGN according to a first embodiment of the present disclosure;

FIG. 6 shows a system for controlling multicast bearer resources in an NGN according to a second an embodiment of the present disclosure;

FIG. 7 shows an apparatus for controlling multicast bearer resources in an NGN according to a first an embodiment of the present disclosure;

FIG. 8 shows an apparatus for controlling multicast bearer resources in an NGN according to a second an embodiment of the present disclosure;

FIG. 9 is a flowchart of a method for requesting a multicast bearer resource in an NGN according to a preferred embodiment of the present disclosure;

FIG. 10 is a flowchart of a method for releasing a multicast bearer resource in an NGN according to a preferred embodiment of the present disclosure;

FIG. 11 is a flowchart of a method for changing a multicast bearer resource in an NGN according to a preferred embodiment of the present disclosure;

FIG. 12 takes (S, G) as an example to illustrate how an SPDF handles a multicast bearer resource control message according to an embodiment of the present disclosure;

FIG. 13 takes (S, G) as an example to illustrate how an A-RACF handles a multicast bearer resource control message according to an embodiment of the present disclosure; and

FIG. 14 is a flowchart of a method for requesting a multicast bearer resource in a PULL mode in an NGN according to a preferred embodiment of the present disclosure.

### DETAILED DESCRIPTION

In order to make the technical solution, objectives and merits of the present disclosure clearer, the disclosure is detailed below by reference to accompanying drawings and preferred embodiments.

In order to control multicast bearer resources in an NGN and ensure the multicast technology to be applicable to the IPTV service on the bearer layer of the network, the capabilities of the SPDF and the A-RACF in the RACS are extended; and the capabilities of the RCEF and the BGF are extended or an entity capable of controlling the multicast stream bearer resource is set to accomplish these purposes:
The A-RACF and the SPDF can control the multicast bearer resources to be processed according to the request of applying for, modifying, or releasing the multicast bearer resources, and generate a multicast stream bearer policy; and
the BGF and the RCEF or the set entity can exercise resource reservation control, bandwidth restriction control, resource activation control, access authorization control, or any combination thereof, over the multicast bearer resource of the multicast stream according to the multicast stream control policy delivered by the SPDF or A-RACF.

In this embodiment, at the time of requesting or modifying the multicast stream bearer resource, the A-RACF is adapted to perform access-side (including access network and access convergence network) authorization and exercise admission control over the multicast bearer resource to be controlled; the SPDF is adapted to authorize the request of applying for or modifying the multicast bearer resource; the RCEF is adapted to exercise resource reservation control, bandwidth restriction control, resource activation control, access authorization control, or any combination thereof, over the multicast bearer resource of the multicast stream according to the multicast stream control policy; and the BGF is adapted to exercise resource reservation control, bandwidth restriction control, resource activation control, or any combination thereof, over the multicast bearer resource of the multicast stream according to the multicast stream control policy.

In this embodiment, function of storing and updating the multicast stream state information may be set at the A-RACF and the SPDF, and the multicast stream can be authorized and/or admitted according to the information carried in the request of applying for or modifying the multicast bearer resource and/or the current resource information of the bearer layer. In order to fulfill such functions, the following entities are added in this embodiment:
a Multicast Resource Authorization Function (MRAF), adapted to: store and update the multicast stream state information, and exercise authorization and/or admission control over the multicast stream according to the information carried in the request of applying for or modifying the multicast bearer resource and/or the current resource information of the bearer layer; and
a Multicast Control Processing Function (MCPF), adapted to install, modify, or delete a multicast stream control policy, and execute the multicast stream control policy, for example, exercise resource reservation control, bandwidth restriction control, resource activation control, access authorization control, or any combination thereof, over the multicast bearer resource of the multicast stream.

Table 1 shows the function entities newly added in the entities shown in FIG. 2:

**Table 1**

| **Entity** | **New Function Entity** |
|---|---|
| SPDF | MRAF |
| A-RACF | MRAF |
| RCEF | MCPF |
| BGF | MCPF |

In Table 1, an MCPF is added to the RCEF and the BGF only. In practice, the MCPF may serve as an independent bearer layer function entity which is set on the IP edge and the core border node respectively to perform information interaction with the RCEF and the BGF respectively.

A system for controlling multicast bearer resources in an NGN is disclosed in an embodiment of the present disclosure. The system includes: a network entity in a RACS, adapted to: receive a request of controlling a multicast bearer resource, and control the multicast bearer resource according to the request.

In this embodiment, the request of controlling the multicast bearer resource may be a request of applying for, releasing, or modifying the multicast bearer resource. The following text describes how the system handles different requests of controlling multicast bearer resources.

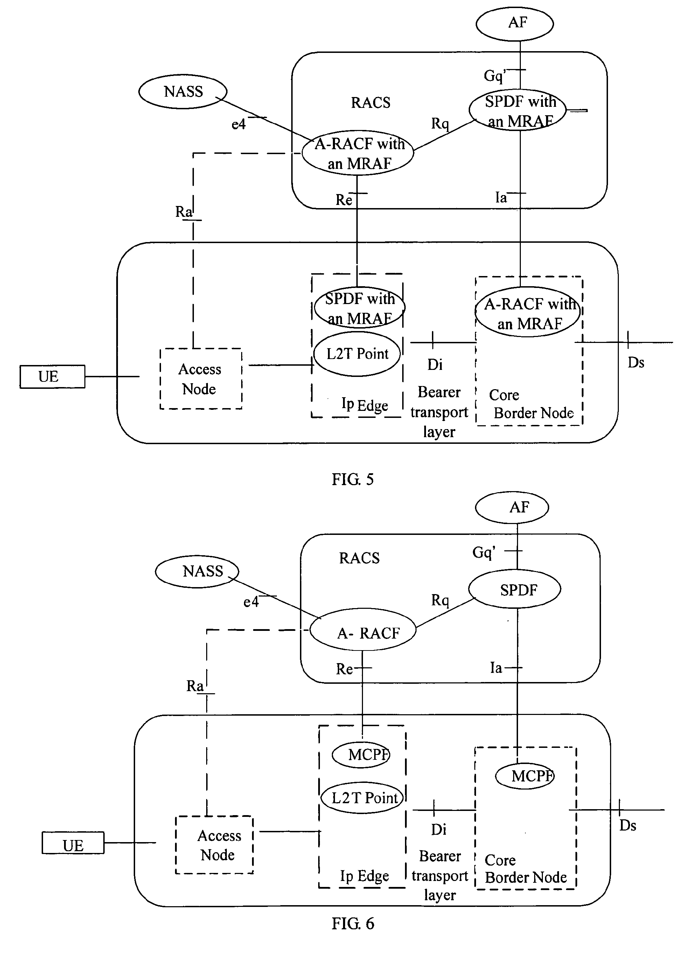

FIG. 5 shows a system for controlling multicast bearer resources in an NGN according to a first embodiment of the present disclosure. In the following description about the system, a request of applying for a multicast stream bearer resource is taken as an example, and the newly added function entities are set in the SPDF, A-RACF, RCEF, and BGF. As shown in FIG. 5, the system includes: an SPDF, an A-RACF, an RCEF, and a BGF.

The SPDF is adapted to: receive a request of applying for a multicast bearer resource from the AF, authorize the request, send the authorized request of applying for a multicast bearer resource to the A-RACF, send a multicast stream control policy to the BGF, and receive the access-side authorization and admission control result sent by the A-RACF and the policy installation response sent by the BGF.

The A-RACF is adapted to: receive the authorized request of applying for a multicast bearer resource sent by the SPDF, exercise access-side authorization and admission control over the requested multicast stream resource according to the access network policy and the resource conditions, send the multicast stream control policy to the RCEF, receive the policy installation result response sent by the RCEF, and send the access-side authorization and admission control result to the SPDF.

The RCEF is adapted to: install and execute the multicast stream control policy sent by the A-RACF, and return a policy installation result response to the A-RACF.

The BGF is adapted to: install and execute the multicast stream control policy sent by the SPDF, and return a policy installation result response to the SPDF.

In this embodiment, the system may further include an AF.

The SPDF is adapted to: send the obtained result of processing the request of applying for the multicast bearer resource to the AF, which is acquired from the access-side authorization and admission control result received from A-RACF, or acquired from gathering the access-side authorization and admission control results received by the A-RACF and the policy installation response received from the BGF.

The AF is adapted to receive the result of processing the request of applying for the multicast bearer resource from the SPDF.

In this embodiment, before sending the multicast stream control policy to the BGF, the SPDF may judge whether the BGF already holds the multicast stream (other UEs which use the multicast stream have requested the bearer resource). If the BGF already holds the multicast stream, the SPDF does not send any multicast stream control policy to the BGF. In this case, the BGF does not need to install or execute the multicast stream control policy. If the BGF does not hold the multicast stream, the SPDF executes the foregoing solution.

In this embodiment, the A-RACF exercises authorization and admission control over the multicast resource according to the access-side policy and the current resource conditions. For example, the A-RACF judges whether the corresponding RCEF already holds the corresponding multicast stream. If the corresponding RCEF already holds the corresponding multicast stream, the A-RACF authorizes the access network multicast resource in view of the current network resource conditions of the access network; otherwise, the A-RACF authorizes the multicast resource of the access network and the access convergence network in view of the current network resource conditions of the access network and the access convergence network.

In this embodiment, when the RCEF and the BGF uses a PULL mode to request the RACS to apply for the bearer resource for the multicast stream, a Multicast Policy Request Function (MPRF) may be added. The MPRF may be set in the RCEF and the BGF respectively, or set independently.

After the RCEF receives a request of joining a multicast group from the UE through an access node, the RCEF sends a multicast stream control policy request to the A-RACF through the MPRF. After receiving a multicast stream control policy response from the A-RACF, the RCEF executes the multicast stream control policy delivered by the A-RACF for the multicast stream.

The RCEF may judge whether the multicast path of the multicast stream is set up. If the multicast path is set up, the RCEF performs no operation; if the multicast path is not set up, the RCEF sends a multicast path setup message to the BGF. After receiving the message, the BGF sends a multicast bearer resource authorization request to the SPDF through the MPRF. After receiving a multicast bearer resource authorization response from the SPDF, the BGF executes the multicast stream control policy delivered by the SPDF.

FIG. 6 shows a system for controlling multicast bearer resources in an NGN according to a second embodiment of the present disclosure. In the following description about the system, a request of applying for a multicast stream bearer resource is taken as an example. In this embodiment, the newly added entities are set independently. The system includes: an SPDF, an A-RACF, and an MCPF on the IP edge node and an MCPF on the core border node.

The SPDF is adapted to: receive a request of applying for a multicast bearer resource from the AF, authorize the request, send the authorized request of applying for a multicast bearer resource to the A-RACF, send a multicast stream control policy to the MCPF on the core border node, and receive the access-side authorization and admission control result sent by the A-RACF and the policy installation response sent by the MCPF on the core border node.

The A-RACF is adapted to: receive the authorized request of applying for a multicast bearer resource sent by the SPDF, exercise access-side authorization and admission control over the requested multicast stream resource according to the access network policy and the resource conditions, send the multicast stream control policy to the MCPF on the IP edge, receive the policy installation result response sent by the MCPF on the IP edge, and send the access-side authorization and admission control result to the SPDF.

The MCPF on the IP edge is adapted to: install and execute the multicast stream control policy received from the A-RACF, and return a policy installation result response to the A-RACF; and the MCPF on the core border node is adapted to: install and execute the multicast stream control policy received from the SPDF, and return a policy installation result response to the SPDF.

In this embodiment, the system may further include an AF.

The SPDF is adapted to: send the obtained result of processing the request of applying for the multicast bearer resource to the AF, which is acquired from the access-side authorization and admission control result received from A-RACF, or acquired from gathering the access-side authorization and admission control results received by the A-RACF and the policy installation response received from the BGF.

The AF is adapted to receive the result of processing the request of applying for the multicast bearer resource from the SPDF.

The foregoing embodiments describe a process of processing a request of applying for a multicast bearer resource. In practice, the request of releasing a multicast bear resource and the request of modifying a multicast bearer resource may be processed. At the time of processing the request of releasing a multicast bearer resource, the request is sent to the A-RACF to release the resource, and the A-RACF and the SPDF may further instruct the transport layer to delete the multicast stream control policy of the multicast stream. At the time of processing the request of modifying a multicast bearer resource, the SPDF authorizes the request, sends the request to the A-RACF to modify the resource, and the A-RACF and the SPDF may further instruct the transport layer to modify the multicast stream control policy of the multicast stream.

An apparatus for controlling multicast bearer resources in an NGN is disclosed in an embodiment of the present disclosure. The apparatus includes:
a receiving module, adapted to receive a request of controlling a multicast bearer resource; and
a multicast resource processing module, adapted to control the multicast bearer resource according to the received control request.

In this embodiment, the request of controlling the multicast bearer resource may be a request of applying for, releasing, or modifying the multicast bearer resource. The following text describes how the system handles different requests of controlling multicast bearer resources.

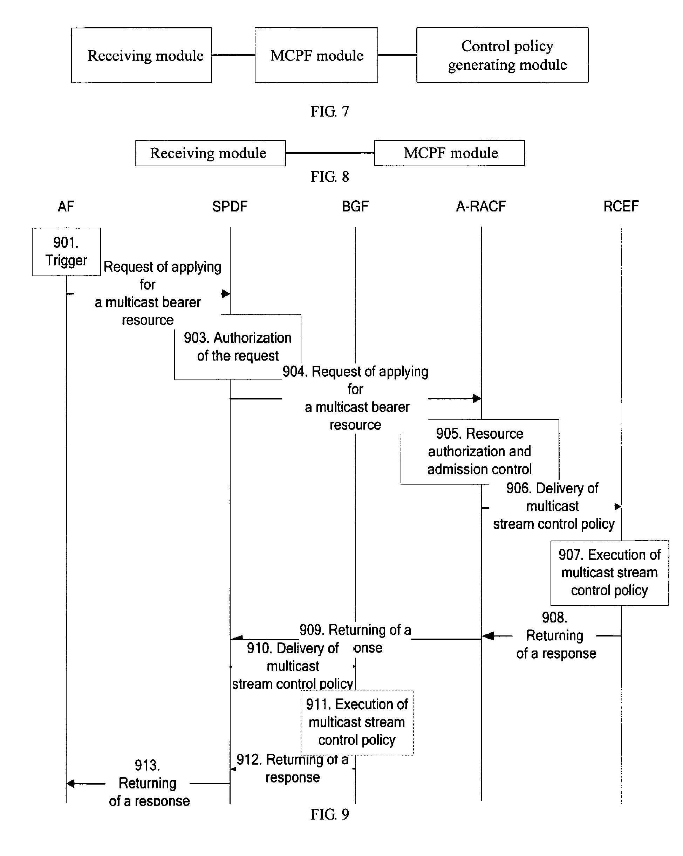

FIG. 7 shows a structure of an apparatus for controlling multicast bearer resources in an NGN according to a first embodiment of the present disclosure. The apparatus is an SPDF or an A-RACF, and includes:
a receiving module, adapted to receive a request of applying for, releasing, or modifying a multicast bearer resource;
an MRAF module, adapted to: authorize the multicast resource corresponding to the applying request and the modifying request, and release the multicast resources corresponding to the releasing request; and
a control policy generating module, adapted to generate a multicast stream control policy for the multicast stream corresponding to the applying request or the request of the modifying request.

In this embodiment, the apparatus further includes: a policy sending module, adapted to send the generated multicast stream control policy.

In this embodiment, if the apparatus employs the PULL mode, the apparatus further includes:
a policy request receiving module, adapted to receive a multicast stream control policy request; and
a policy sending module, adapted to send the generated multicast stream control policy.

FIG. 8 shows a structure of an apparatus for controlling multicast bearer resources in an NGN according to a second embodiment of the present disclosure. The apparatus is a BGF or an RCEF, and includes:
a receiving module, adapted to receive a multicast stream control policy or an instruction of modifying or deleting the multicast stream control policy; and
an MCPF module, adapted to install and execute the multicast stream control policy, or modify or delete the multicast stream control policy.

The apparatus shown in FIG. 8 works in the PULL mode. In the PULL mode, the apparatus further includes:
a multicast policy requesting module, adapted to request a multicast stream control policy.

Given below are three method embodiments about how to set up, release and modify a multicast bearer resource in the PULL mode. In the three embodiments, an MRAF is set in the SPDF; an MRAF is set in the A-RACF; an MCPF is set in the BGF; an MCPF is set in the RCEF; and the PULL mode is applied.

FIG. 9 is a flowchart of a method for setting up a multicast bearer resource in an NGN according to an embodiment of the present disclosure. The method in this embodiment includes the following steps:

Step 901: The AF receives a service-layer session negotiation message, for example, a Session Description Protocol (SDP) message, and obtains the session-related information carried in the message.

In this step, the session-related information includes the address of the multicast group which the UE expects to join, and media-related information (such as the bandwidth required).

Step 902: The AF sends a request of applying for a multicast bearer to the SPDF according to the session-related information. The request carries the information about the multicast stream.

In this step, the information about the multicast stream compulsorily includes a UE identifier and multicast stream description information. The multicast stream description information compulsorily includes a multicast group category-D address, and optionally includes at least one multicast source address and a source address filtering mode.

The information about the multicast stream may further include: bandwidth information in the multicast stream request and/or resource activation indication information. If the information about the multicast stream includes the resource activation indication information, it indicates that bearer-layer resource needed to be activated, and the bearer-layer resource can be put into use as soon as being set up after the bearer-layer resource has been activated. If the information about the multicast stream includes no resource activation indication information, the established bearer-layer resource is not put into use until a further indication is received from the AF.

Step 903: After receiving the request of applying for a multicast bearer from the AF, the SPDF authorizes the request. If the authorization succeeds, the SPDF checks whether the BGF already holds the multicast stream. If the BGF already holds the multicast stream, the SPDF decides to send the authorized request of applying for the multicast bearer to the A-RACF, and steps 904-909 are performed subsequently. If the BGF does not hold the multicast stream, the SPDF decides to send a request of applying for the multicast bearer to the A-RACF and send a multicast stream control policy to the BGF, and steps 904-909 and steps 910-912 are performed subsequently.

In this step, if the transmitted multicast stream request carries no bandwidth information, the SPDF queries the local database to acquire the bandwidth required by the multicast stream.

In this step, a check is made about whether the request is authorized successfully according to the admission control function set by the SPDF for the multicast stream; and additionally, the SPDF generates a control policy and sends it to the BGF.

The current state of the multicast stream carried in the request is determined according to the multicast stream state information stored in the SPDF. In this way, it is determined whether the BGF already holds the multicast stream. For example, when the H.248 protocol is applied on the Ia interface, the SPDF judges whether the BGF has set up a context for the multicast stream.

In this embodiment, steps 910-912 are omissible if the BGF already holds the multicast stream; and steps 910-912 may occur before or during steps 904-909.

Step 904: The SPDF sends a request of applying for a multicast bearer resource to the A-RACF. The information carried in the request is consistent with the information carried in the request in step 902.

Step 905: After receiving the request, the A-RACF exercises authorization and admission control over the multicast resource according to the access network policy and the resource conditions.

For example, the A-RACF judges whether the corresponding RCEF already holds the corresponding multicast stream. If the corresponding RCEF already holds the corresponding multicast stream, the A-RACF authorizes the access network multicast resource in view of the current network resource conditions of the access network; if the corresponding RCEF does not hold the corresponding multicast stream, the A-RACF authorizes the multicast resource of the access network and the access convergence network in view of the current network resource conditions of the access network and the access convergence network.

In this step, the current state of the multicast stream carried in the request is determined according to the multicast stream state information stored in the A-RACF. In this way, it is determined whether the RCEF already holds the multicast stream.

Step 906: The A-RACF sends a multicast stream control policy to the RCEF, instructing the RCEF to exercise resource reservation control, bandwidth restriction control, resource activation control, access authorization control, or any combination thereof, over the multicast bearer resource of the multicast stream.

The multicast stream control policy includes: multicast stream description information, a UE identifier, and multicast stream bandwidth information.

The multicast stream control policy may further include resource activation indication information. If the multicast stream control policy includes the resource activation indication information, it indicates activation of the bearer-layer access resource, and the bearer-layer access resource can be put into use as soon as being set up. If the multicast stream control policy includes no resource activation indication information, the established bearer-layer access resource is not put into use until a further indication is received from the A-RACF.

Step 907: The RCEF installs and executes the multicast stream control policy which includes resource reservation, and/or bandwidth restriction, and/or access authorization performed by the RCEF for the multicast stream.

In this step, the RCEF may perform multicast access authorization for the IGMP request subsequently received from the UE according to the multicast stream description information (such as multicast group address) carried in the multicast stream control policy, and admits only the IGMP multicast service stream request in the multicast stream description information delivered by the upper-layer AF through the RACS. In this way, admission control is exercised over the multicast service request of the user according to the application authorization of the upper-layer AF.

Step 908: The RCEF returns a policy installation response to the A-RACF.

Step 909: The A-RACF returns an access-side multicast bearer applying for response to the SPDF, indicating the result of reserving the access-side multicast bearer resource of the multicast stream.

Step 910: The SPDF determines that it is necessary to deliver a multicast stream control policy to the BGF, and instructs the BGF to exercise resource reservation control, bandwidth restriction control, resource activation control, or any combination thereof, over the multicast bearer resource of the multicast stream.

If the SPDF determines that the BGF does not hold the multicast stream, the SPDF delivers a multicast stream control policy, instructing the BGF to install the multicast stream control policy. For example, since the H.248 protocol is applied on the Ia interface currently, two H.248 virtual endpoints Tc (at the core network side) and Ta (at the access network side) are added through an ADD command. The two endpoints are in the same context.

The SPDF sends the multicast stream control policy to the BGF.

In this step, the multicast stream control policy includes: multicast stream description information, and authorized bandwidth information. The multicast stream control policy may further include resource activation indication information. If the multicast stream control policy includes the resource activation indication information, it indicates activation of the bearer-layer access resource, and the bearer-layer access resource can be put into use as soon as being set up. If the multicast stream control policy includes no resource activation indication information, the established bearer-layer access resource is not put into use until a further indication is received from the A-RACF.

Step 911: The BGF installs and executes the multicast stream control policy, and performs resource reservation, and/or bandwidth restriction, and/or resource activation according to the multicast stream control policy.

Step 912: The BGF returns a policy installation response to the SPDF.

Step 913: The SPDF returns a multicast bearer applying for response that carries a multicast bearer resource reservation result to the AF.

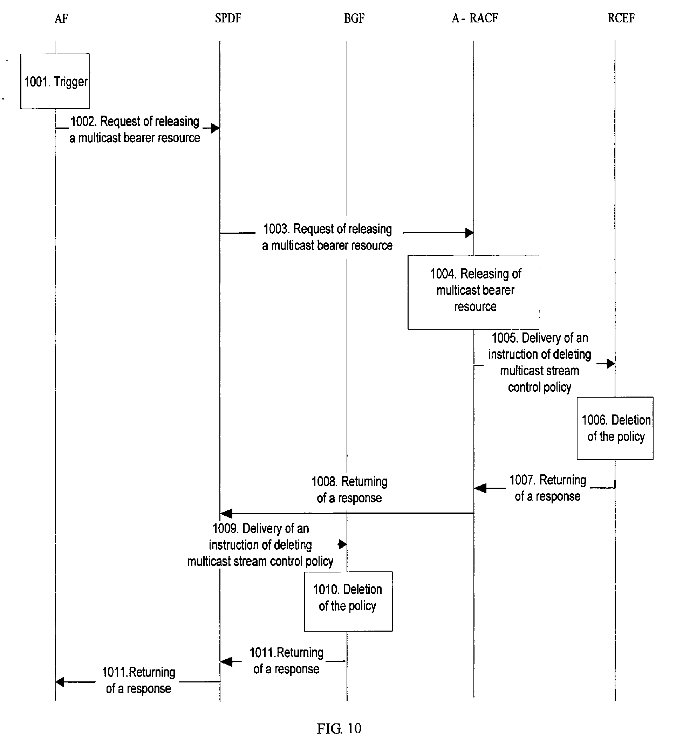

After receiving the session completion message, the AF needs to request the RACS to release the corresponding multicast bearer resource, as shown in FIG. 10.

FIG. 10 is a flowchart of a method for releasing a multicast bearer resource in an NGN according to an embodiment of the present disclosure. The method in this embodiment includes the following steps:

Step 1001: The AF receives the session completion message from the service layer, and decides to request the bearer layer to release the multicast bearer resource.

Step 1002: The AF sends a request of releasing the multicast bearer resource to the SPDF. The request carries at least a UE identifier and a session identifier.

In this step, the Gq' interface is already defined between the AF and the SPDF. An STR/STA command may be executed through the Diameter protocol to end the session, and a session identifier may be applied to notify the SPDF that the session needs to be ended. The session identifier can identify the multicast stream, and does not need to carry other session-related information.

Step 1003: The SPDF sends a request of releasing the multicast resource to the A-RACF, requesting the A-RACF to release the access-side resource. The request carries at least a UE identifier and a session identifier.

Step 1004: After receiving the request of releasing the multicast resource from the SPDF, the A-RACF releases the corresponding multicast resource.

If the multicast stream is not used by any other UE served by the RCEF, the A-RACF decides to release the multicast bearer resources of the access network and the multicast bearer resources of the access convergence network occupied by the multicast stream; if the multicast stream is still used by any other UE served by the RCEF, the A-RACF decides to release only the multicast bearer resources of the access network occupied by the multicast stream.

Specifically, the A-RACF judges the current state of the multicast stream according to the multicast stream state information stored by the A-RACF, and checks whether the multicast stream is still used by any other UE served by the RCEF.

Step 1005: The A-RACF instructs the RCEF to delete the corresponding multicast stream control policy. The policy carries the multicast stream description information and the UE identifier.

Step 1006: The RCEF deletes the multicast stream control policy.

Step 1007: The RCEF returns a policy deletion response to the A-RACF.

Step 1008: The A-RACF returns a multicast bearer resource release response to the SPDF.

Step 1009: The SPDF judges whether it is necessary to delete the corresponding multicast stream control policy on the BGF. If the multicast stream still used by another UE served by the BGF, the SPDF needs only to request the A-RACF to release the access-side resource, without the need of deleting the multicast stream control policy on the BGF, namely, steps 1009-1011 do not occur. However, if the multicast stream is not used by any other UE on the BGF, the SPDF needs to send a request of releasing the multicast resources and a request of deleting the multicast stream policy to the A-RACF and the BGF respectively, either sequentially or simultaneously. That is, steps 1003-1008 may be performed before or after steps 1009-1011. The request of releasing the multicast bearer resource may be sent to the A-RACF first, or sent to the BGF first. The foregoing steps may also occur concurrently. If the SPDF determines it necessary to delete the corresponding multicast bearer resources on the BGF, the SPDF instructs the BGF to delete the multicast bearer resource. If the H.248 protocol is applied on the Ia interface currently, a Substract command is executed to delete the two H.248 virtual endpoints Tc (at the core network side) and Ta (at the access network side) corresponding to the multicast stream.

Step 1010: The BGF deletes the corresponding policy according to the instruction of the SPDF.

Step 1011: The BGF returns a policy deletion response to the SPDF.

Step 1012: The SPDF returns a resource release response to the AF.

In this embodiment, the change of codes of the multicast stream, the change of the multicast source, or the switching of the channel leads to change of the bandwidth resource required by the multicast stream or change of the multicast stream filtering rule. In this case, it is necessary to modify the bearer resource of the multicast stream on the bearer layer accordingly.

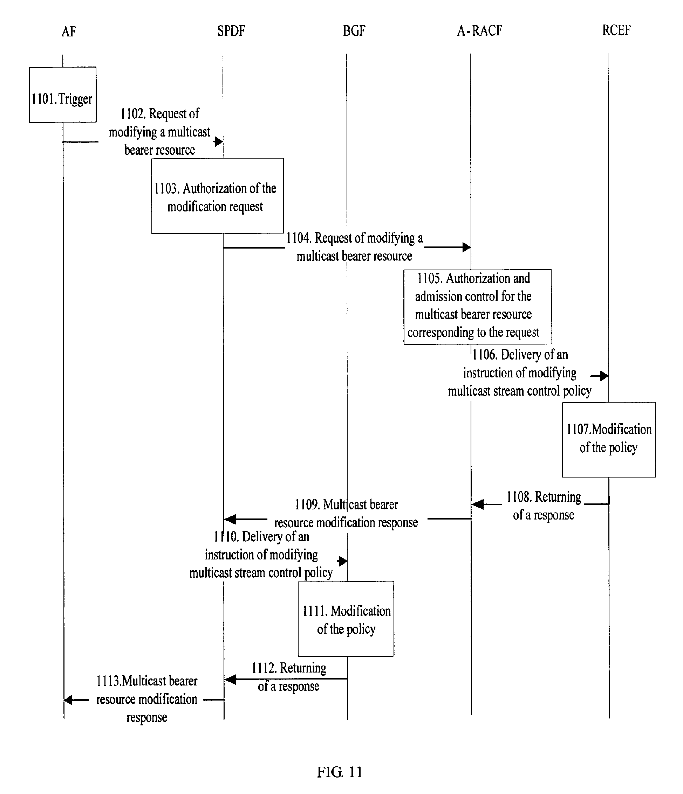

FIG. 11 is a flowchart of modifying a multicast bearer resource in an NGN in an embodiment of the present disclosure. The flow includes the following steps:

Step 1101: The AF receives the session message of the service layer and determines that it is necessary to modify the bearer resource of the multicast data stream related to the session on the bearer layer.

Step 1102: The AF sends a request of modifying the multicast bearer resource to the SPDF. The request carries at least a UE identifier.

In this step, the request may further include: multicast stream information (multicast group address) after modification, requested bandwidth information after modification, and other QoS parameters after modification. If the request is sent through IGMP V3, the request needs to carry a multicast source address additionally, and may carry a source address filtering mode.

Step 1103: After receiving the request of modifying a multicast bearer resource, the SPDF authorizes the request. After the authorization succeeds, the SPDF judges whether the multicast stream control policy on the BGF needs to be modified. If the multicast stream control policy on the BGF does not need to be modified, it is necessary only to modify the multicast bearer resource on the A-RACF for the multicast stream, as described in steps 1104-1109. If the multicast stream control policy on the BGF needs to be modified, it is necessary to modify the multicast bearer resource on the A-RACF for the multicast stream, as described in steps 1104-1109, and modify the multicast stream control policy on the BGF, as described in steps 1110-1112.

In this step, the SPDF judges the current state of the multicast stream according to the multicast stream state information stored by the SPDF. If the SPDF determines that the multicast stream is still used by another UE served by the BGF, it is not necessary to modify the multicast stream control policy on the BGF. For example, when the UE switches the channel, if the channel is still watched by another UE before switching, the SPDF needs only to request the A-RACF to modify the access multicast bearer resource, without the need of modifying the multicast bearer resource on the BGF.

In this embodiment, steps 1110-1112 are optional; and steps 1110-1112 may be performed before or during steps 1104-1109.

Step 1104: The SPDF sends a request of modifying the multicast bearer resource to the A-RACF, requesting the A-RACF to modify the access-side multicast bearer resource. The request carries at least a UE identifier.

In this step, the request may further include: multicast stream information (multicast group address) after modification, requested bandwidth information after modification, and other QoS parameters after modification. If the request is sent through IGMP V3, the request needs to carry a multicast source address additionally, and may carry a source address filtering mode.

Step 1105: After receiving the request from the SPDF, the A-RACF performs authorization and admission control according to the access-side policy and the resource conditions by using the new QoS parameters.

For example, the A-RACF determines the access-side multicast bearer resource currently occupied by the multicast stream according to the identifier information of the multicast stream, modifies the access-side multicast bearer resource according to the information about modifying the multicast stream, including modification of the multicast bearer resource of the access network and/or modification of the multicast bearer resource of the access convergence network.

Step 1106: The A-RACF instructs the RCEF to modify the corresponding multicast stream control policy.

This policy needs to carry a UE identifier, and may further carry the multicast stream description information after modification, bandwidth information after modification, and other QoS parameters after modification.

Step 1107: The RCEF modifies the multicast stream control policy.

Step 1108: The RCEF returns a policy modification response to the A-RACF.

Step 1109: The A-RACF returns a multicast bearer resource modification response to the SPDF.

Step 1110: If determining that it is necessary to modify the multicast resource on the BGF, the SPDF instructs the BGF to modify the corresponding multicast stream control policy.

If the H.248 protocol is applied on the Ia interface currently, the BGF executes a Modify command to modify the attributes of the two H.248 virtual endpoints Tc and Ta corresponding to the multicast stream.

Step 1111: The BGF modifies the multicast stream control policy.

Step 1112: The BGF returns a policy modification response to the SPDF.

Step 1113: The SPDF returns a multicast bearer resource modification response to the AF.

Through the foregoing description about the system, the apparatus and the method disclosed herein, it is evident that due to difference between the multicast technology and the unicast technology, the SPDF and the A-RACF need to be additionally capable of processing the message of controlling the multicast bearer resource (including the request of applying for, releasing and modifying the multicast bearer resource) in view of the characteristics of the multicast technology. In this way, the bearer layer is ultimately capable of controlling the multicast stream bearer resource.

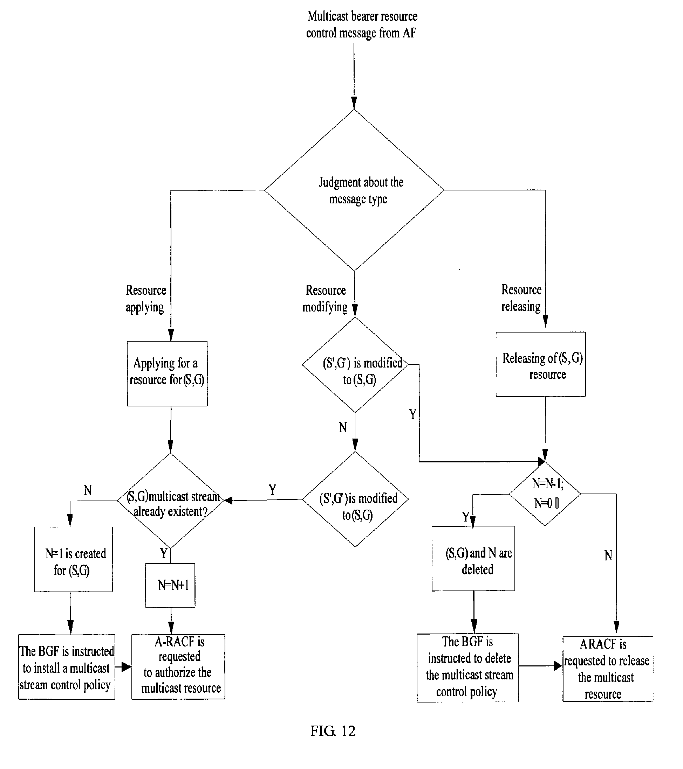

FIG. 12 takes (S, G) as an example to illustrate how an SPDF handles a message of controlling a multicast bearer resource. In FIG. 12, (S, G) represents a multicast group, S is a multicast source address, G is a multicast group address, and N is the quantity of UEs served by (S, G) on the BGF; and (S', G') represents another multicast group, S' is the multicast source address, and G' is the multicast group address.

In this embodiment, the SPDF needs to store the corresponding relation between multicast stream (S, G) of all multicast bearer resource control messages and the quantity of UEs served by the multicast stream on the BGF, and update the quantity of UEs served by the multicast stream on the BGF in real time (the corresponding relation may be treated as multicast stream state information), with a view to determining the process of handling the multicast bearer resource control messages. After receiving a multicast bearer resource control message from the AF, the SPDF judges the type of the message. The message falls into the following types:
(A) Request of applying for a multicast bearer resource: The SPDF judges whether an (S, G) multicast stream already exists. If (S, G) multicast stream does not exist, the SPDF creates the corresponding N (N=1) for the (S, G), and then instructs the BGF to install a multicast stream control policy for the multicast stream, and requests the A-RACF to reserve the access-side multicast bearer resource. If the corresponding N already exists, N = N + 1, and the SPDF requests the A-RACF to reserve the access-side multicast bearer resource.
(B) Request of releasing a multicast bearer resource: The SPDF judges whether N = N-1 corresponding to the (S, G) is equal to 0. If N is 0, the SPDF deletes the corresponding relation between (S, G) and N, and instructs the BGF to delete the multicast stream control policy and requests the A-RACF to release the access-side multicast bearer resource. If N is not 0, the SPDF requests the A-RACF to release the access multicast bearer resource directly.
(C) Request of modifying a bearer resource: For a request of allocating the resource of (S, G) to another multicast stream (S', G'), process (B) applies; for a request of allocating the resource of another multicast stream (S', G') to (S, G), process (A) applies.

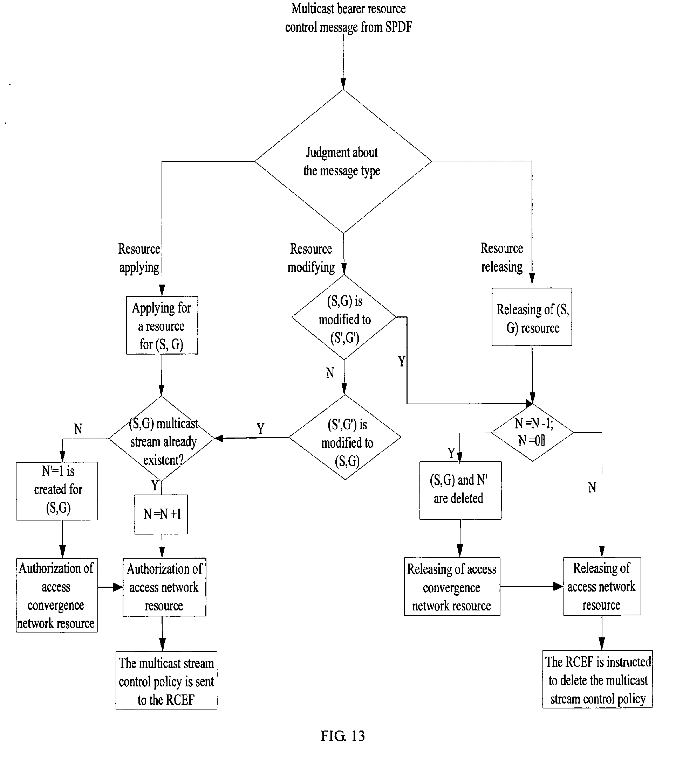

Similar to the process of the SPDF processing the multicast bearer resource control message, FIG. 13 takes (S, G) as an example to illustrate how an A-RACF handles an access multicast bearer resource control message. In FIG. 13, (S, G) represents a multicast group, S is a multicast source address, G is a multicast group address, and N is the quantity of UEs served by (S, G) on the RCEF; and (S', G') represents another multicast group, S' is the multicast source address, and G' is the multicast group address.

In this embodiment, the A-RACF needs to store the corresponding relation between multicast stream (S, G) of all multicast bearer resource control messages and the quantity of UEs that receive the multicast stream, and update the quantity of UEs in real time, with a view to determining the process of handling the access multicast bearer resource control messages. After receiving an access multicast bearer resource control message from the SPDF, the A-RACF judges the type of the message:
(A) Request of applying for a multicast bearer resource: The A-RACF judges whether an (S, G) multicast stream already exists. If no (S, G) multicast stream exists, the A-RACF creates the corresponding N' (N'=1) for the (S, G), and then authorizes the multicast bearer resources of the access network and the access convergence network; if the corresponding N' already exists, N' = N' + 1, and the A-RACF authorizes the multicast bearer resource of the access network. Finally, the A-RACF instructs the RCEF to install and execute the multicast stream control policy.
(B) Request of releasing a multicast bearer resource: The A-RACF judges whether N' = N'-1 corresponding to the (S, G) is equal to 0. If N' is 0, the A-RACF deletes the corresponding relation between (S, G) and N', and authorizes release of the multicast bearer resources of the access network and the access convergence network. If N' is not 0, the A-RACF authorizes release of the multicast bearer resource of the access network. Finally, the A-RACF instructs the RCEF to delete the multicast stream control policy.
(C) Request of modifying a bearer resource: For a request of allocating the resource of (S, G) to another multicast stream (S', G'), process (B) applies; for a request of allocating the resource of another multicast stream (S', G') to (S, G), process (A) applies.

In the foregoing solution, after the multicast bearer resource is authorized, the A-RACF sends a multicast stream control policy to the RCEF, and/or the SPDF sends a multicast stream control policy to the BGF, both being based on the PUSH mode. In this embodiment, the multicast stream control policy may also be applied in the PULL model. That is, the bearer layer requests a multicast stream control policy from the RACS; the bearer-layer IP edge receives the request of joining a multicast group from the UE through an access node, and then sends a multicast stream control policy request to the RACS. In this case, the A-RACF in the RACS sends a multicast stream control policy to the RCEF, and/or the SPDF sends a multicast stream control policy to the BGF.

However, the prior art defines the RCEF and the BGF as policy enforcement entities which are not capable of requesting reservation of multicast bearer resources proactively. In this embodiment, therefore, the RCEF and the BGF need to not only extend the capabilities described in Table 1, but also add an MPRF. So that the RCEF and the BGF can send a multicast bearer resource authorization request to the RACS initiatively after receiving a request of joining a multicast group or a message of setting up a multicast path. However, the MPRF may also act as an independent function entity on the IP edge or on core border to request the RACS to authorize the multicast bearer resource.

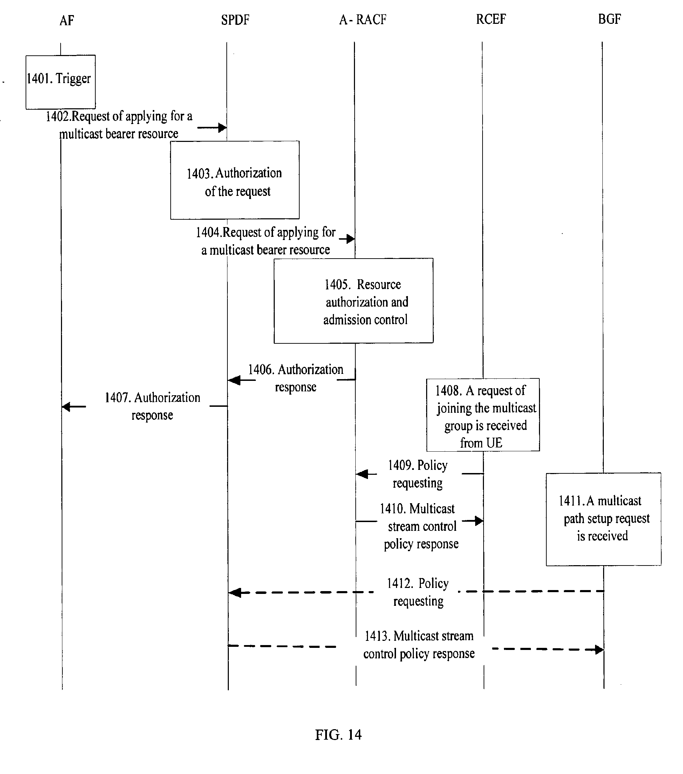

The following process of applying for a multicast bearer resource is implemented in the PULL mode. As shown in FIG. 14, the process includes the following steps:

Step 1401: The AF receives a service-layer session negotiation message, for example, a SDP message, and obtains the session-related information carried in the message.

In this step, the session-related information includes the address of the multicast group which the UE expects to join, and multicast stream information (such as the bandwidth required).

Step 1402: The AF sends a request of applying for a multicast bearer resource to the SPDF according to the session-related information. The request carries the information about the multicast stream.

In this step, the information about the multicast stream compulsorily includes a UE identifier and multicast stream description information. The multicast stream description information compulsorily includes a multicast group category-D address, and optionally includes at least one multicast source address and a source address filtering mode.

The information about the multicast stream may further include: bandwidth information in the request and/or resource activation indication information. If the information about the multicast stream includes the resource activation indication information, it indicates that bearer-layer resource needed to be activated, and the bearer-layer resource can be put into use as soon as being set up after the bearer-layer resource has been activated. If the information about the multicast stream includes no resource activation indication information, the established bearer-layer resource is not put into use until a further indication is received from the AF.

Step 1403: After receiving the request from the AF, the SPDF authorizes the request successfully. The SPDF checks whether the BGF already holds the multicast stream. If the BGF already holds the multicast stream, the SPDF determines that it is necessary to send the request to the A-RACF only; otherwise, the SPDF determines that it is necessary to send the request to the A-RACF, and optionally, deliver a multicast stream control policy to the BGF.

In this step, if the request carries no bandwidth information, the SPDF needs to obtain the bandwidth information of the multicast stream.

In this step, a check is made on whether the request is authorized successfully according to the admission control function set by the SPDF for the multicast stream.

The current state of the multicast stream carried in the request is determined according to the multicast stream state information stored in the SPDF. In this way, it is determined whether the BGF already holds the multicast stream. For example, when an H.248 protocol is applied on the Ia interface, the SPDF judges whether the BGF has set up a context for the multicast stream.

Step 1404: The SPDF sends a multicast bearer resource applying for request to the A-RACF.

Step 1405: After receiving the request, the A-RACF exercises authorization and admission control over the multicast resource according to the access network policy and the resource conditions.

For example, the A-RACF judges whether the corresponding RCEF already holds the corresponding multicast stream. If the corresponding RCEF already holds the corresponding multicast stream, the A-RACF authorizes the access network multicast resource in view of the current network resource conditions of the access network; otherwise, the A-RACF authorizes the multicast resource of the access network and the access convergence network in view of the current network resource conditions of the access network and the access convergence network.

In this step, the current state of the multicast stream carried in the request is determined according to the multicast stream state information stored in the A-RACF. In this way, it is determined whether the RCEF already holds the multicast stream.

Step 1406: The A-RACF returns a multicast bearer resource applying for response to the SPDF.

Step 1407: The SPDF returns a multicast bearer resource applying for response to the AF.

Step 1408: The RCEF receives a request of joining the multicast group (for example, an IGMP message) from the UE, and judges whether the multicast path of the multicast stream is set up. If the multicast path of the multicast stream is not set up, the RCEF decides to send a multicast path setup request (steps 1411-1413 are performed); otherwise, steps 1411-1413 are not performed.

Step 1409: The RCEF sends a request for a policy of authorizing a multicast bearer resource to the A-RACF. The request carries information about the multicast stream and a UE identifier.

Step 1410: The A-RACF searches for the multicast stream control policy for authorizing the UE. Through a multicast bearer resource authorization response, the A-RACF sends the authorized multicast stream control policy to the RCEF. The RCEF installs and executes the multicast stream control policy.

Step 1411: The BGF receives the multicast path setup request, and forwards the request to the core network.

Step 1412: The BGF sends a request for a policy of authorizing a multicast bearer resource to the SPDF. The request carries information about the multicast stream.

Step 1413: The SPDF searches for the multicast stream control policy for authorizing the multicast stream. Through a multicast bearer resource authorization response, the SPDF sends the authorized multicast stream control policy to the BGF. The BGF installs and executes the multicast stream control policy.

As revealed in the description about foregoing embodiments of the system, the apparatus, and the method, the capabilities of the SPDF and the A-RACF on the bearer layer are extended herein so that the SPDF and the A-RACF may control the multicast bearer resource to be processed according to the request of applying for, modifying or releasing the multicast bearer resource, and generate a multicast stream bearer policy. The policy is adapted to control the transport layer to exercise resource reservation control, bandwidth restriction control, resource activation control, access authorization control, or any combination thereof, over the multicast bearer resource of the multicast stream.

In addition, the capabilities of the BGF and the RCEF on the bearer layer are extended or an MRAF under control of the SPDF or the A-RACF is set directly so that the BGF and the RCEF can exercise resource reservation control, bandwidth restriction control, resource activation control, access authorization control, or any combination thereof, over the multicast bearer resource of the multicast stream according to the multicast stream control policy delivered by the SPDF or A-RACF.

Therefore, the method, the system and the apparatus provided herein can control the multicast bearer resource in the NGN. The control covers the applying for, releasing, and modifying of the multicast bearer resource.

Although the disclosure has been described through several preferred embodiments, the disclosure is not limited to such embodiments.

## Claims

1. A method for controlling multicast bearer resources, comprising:
receiving, by a network entity in a Resource and Admission Control, RACS, a request of controlling a multicast bearer resource; and
controlling the multicast bearer resource according to the request.

2. The method of claim 1, wherein:
the request of controlling the multicast bearer resource is a request of applying for the multicast bearer resource; and
the controlling of the multicast bearer resource is: exercising authorization and admission control over the multicast bearer resource corresponding to the applying request.

3. The method of claim 2, wherein the receiving of the request of applying for the multicast bearer resource and the controlling of the multicast bearer resource according to the request comprise:
receiving, by a Service-based Policy Decision Function, SPDF, in the RACS, the request of applying for the multicast bearer resource,
authorizing the request, by the SPDF,
sending, by the SPDF, the authorized request of applying for the multicast bearer resource to an Access-Resource and Admission Control Function, A-RACF; and
exercising, by the A-RACF, authorization and admission control over the multicast bearer resource corresponding to the request.

4. The method of claim 3, further comprising:
sending, by the A-RACF, a multicast stream control policy of a multicast stream to a Resource Control Enforcement Function, RCEF; and
installing and executing, by the RCEF, the multicast stream control policy.

5. The method of claim 3, further comprising:
determining, by the SPDF, that a Border Gateway Function, BGF, does not hold the multicast stream, and sending a multicast stream control policy of the multicast stream to the BGF; and
installing and executing, by the BGF, the multicast stream control policy.

6. The method of claim 3, further comprising:
receiving, by a Resource Control Enforcement Function, RCEF, a request of joining a multicast group from a User Equipment, UE, and requesting a multicast stream control policy of a multicast stream from the A-RACF, wherein the request carries a multicast stream identifier;
sending, by the A-RACF, the multicast stream control policy of the multicast stream to the RCEF; and
installing and executing, by the RCEF, the multicast stream control policy.

7. The method of claim 4 or 6, wherein the executing, by the RCEF, of an access authorization control policy of the multicast stream comprises:
performing, by the RCEF, multicast access authorization for an Internet Group Management Protocol, IGMP, request subsequently received from the UE according to multicast stream description information in the multicast stream control policy.

8. The method of claim 6, further comprising:
determining, by the RCEF, that a multicast path of the multicast stream is not set up, and sending a multicast path setup request that carries the multicast stream identifier to a Border Gateway Function, BGF;
requesting, by the BGF, the multicast stream control policy of the multicast stream from the SPDF;
sending, by the SPDF, the multicast stream control policy of the multicast stream to the BGF; and
installing and executing, by the BGF, the multicast stream control policy.

9. The method of claim 3 or 5, further comprising:
receiving, by the SPDF, a result of authorization and admission control for the multicast bearer resource corresponding to the request from the A-RACF; or
receiving, by the SPDF, the result of authorization and admission control for the multicast bearer resource corresponding to the request from the A-RACF, and, a result of installing the policy from the BGF; and
gathering, by the SPDF, the received results, and returning a result of the request of applying for the multicast bearer resource to an Application Function, AF.

10. The method of claim 3, further comprising:
sending, by the A-RACF and/or the SPDF, a multicast stream control policy of a multicast stream to a Multicast Control Processing Function, MCPF, set in an IP edge node and/or in a core border node respectively; and
installing and executing, by the MCPF in the IP edge node and/or the core border node, the multicast stream control policy.

11. The method of claim 3, wherein:
the A-RACF exercises authorization and admission control over the multicast bearer resource corresponding to the request according to policies at an access side and current resource conditions at the access side.

12. The method of claim 11, wherein:
the access side comprises an access network and an access convergence network; and
the authorization and the admission control exercised according to the policies at the access side and the resource conditions at the access side comprise:
judging whether a Resource Control Enforcement Function, RCEF, already holds a multicast stream;
exercising authorization and admission control over a multicast resource of the access network according to the current resource conditions of the access network if the RCEF already holds the multicast stream; and
exercising authorization and admission control over the multicast resource of the access network and the access convergence network according to the current resource conditions of the access network and the access convergence network if the RCEF does not hold the multicast stream.

13. The method of claim 1, wherein:
the request of controlling the multicast bearer resource is a request of releasing the multicast bearer resource; and
the controlling of the multicast bearer resource is: releasing the multicast bearer resource corresponding to the releasing request.

14. The method of claim 13, wherein the receiving of the request of releasing the multicast bearer resource and the controlling of the multicast bearer resource according to the request comprise:
sending, by a Service-based Policy Decision Function, SPDF, in the RACS, the request of releasing the multicast bearer resource to an Access-Resource and Admission Control Function, A-RACF, after receiving the request of releasing the multicast bearer resource; and
releasing, by the A-RACF, the multicast bearer resource corresponding to the request after receiving the request.

15. The method of claim 14, further comprising:
instructing, by the A-RACF, a Resource Control Enforcement Function, RCEF, to delete a multicast stream control policy of a multicast stream; and
deleting, by the RCEF, the multicast stream control policy of the multicast stream according to the instruction.

16. The method of claim 14, further comprising:
determining, by the SPDF, that a multicast stream on a Border Gateway Function, BGF, is not occupied by any other User Equipment, UE, and instructing the BGF to delete a multicast stream control policy of the multicast stream; and
deleting, by the BGF, the multicast stream control policy of the multicast stream according to the instruction.

17. The method of claim 14 or 16, further comprising:
receiving, by the SPDF, a result of releasing the multicast bearer resource corresponding to the request from the A-RACF; or
receiving, by the SPDF, the result of releasing the multicast bearer resource corresponding to the request from the A-RACF, and, a result of deleting the multicast stream control policy of the multicast stream from the BGF; and
gathering, by the SPDF, the received results, and returning a result of the request of releasing the multicast bearer resource to an Application Function, AF.

18. The method of claim 14, further comprising:
instructing, by the A-RACF and/or the SPDF, a Multicast Control Processing Function, MCPF, set in an IP edge node and/or in a core border node to delete a multicast stream control policy of a multicast stream respectively; and
deleting, by the MCPF in the IP edge node and/or the core border node, the multicast stream control policy.

19. The method of claim 1, wherein:
the request of controlling the multicast bearer resource is a request of modifying the multicast bearer resource; and
the controlling of the multicast bearer resource comprises: exercising, by the network entity in the RACS, authorization and admission control over the multicast bearer resource corresponding to the request of modifying.

20. The method of claim 19, wherein the receiving of the request of modifying the multicast bearer resource and the controlling of the multicast bearer resource according to the request comprise:
authorizing, by a Service-based Policy Decision Function, SPDF, the request of modifying the multicast bearer resource after receiving the request, and sending the authorized request of modifying the multicast bearer resource to an Access-Resource and Admission Control Function, A-RACF; and
exercising, by the A-RACF, authorization and admission control over the multicast bearer resource corresponding to the request.

21. The method of claim 20, further comprising:
instructing, by the A-RACF, a Resource Control Enforcement Function, RCEF, to modify a multicast stream control policy of a multicast stream; and
modifying, by the RCEF, the multicast stream control policy.

22. The method of claim 20, further comprising:
determining, by the SPDF, that it is necessary to modify a multicast stream control policy of a multicast stream on a Border Gateway Function, BGF, and instructing the BGF to modify the multicast stream control policy of the multicast stream; and
modifying, by the BGF, the multicast stream control policy.

23. The method of claim 20 or 22, further comprising:
receiving, by the SPDF, a result of authorization and admission control for the multicast bearer resource corresponding to the request from the A-RACF; or
receiving, by the SPDF, the result of authorization and admission control for the multicast bearer resource corresponding to the request from the A-RACF, and, a result of modifying the multicast stream bearer policy from the BGF; and
gathering, by the SPDF, the received results, and returning a result of the request of modifying the multicast bearer resource to an Application Function, AF.

24. The method of claim 20, further comprising:
instructing, by the A-RACF and/or the SPDF, a Multicast Control Processing Function, MCPF, set in an IP edge node and/or in a core border node to modify a multicast stream control policy of a multicast stream respectively; and
modifying, by the MCPF in the IP edge node and/or the core border node, the multicast stream control policy.

25. The method according to any one of claims 4, wherein the multicast stream control policy comprises at least one of the following:
resource reservation control, bandwidth restriction control, resource activation control, and access authorization control for the multicast stream.

26. A system for controlling multicast bearer resources, comprising:
a network entity in a Resource and Admission Control Subsystem, RACS, adapted to: receive a request of controlling a multicast bearer resource, and control the multicast bearer resource according to the request.

27. The system of claim 26, wherein the request of controlling the multicast bearer resource is a request of applying for the multicast bearer resource; and the system further comprises:
a Service-based Policy Decision Function, SPDF, adapted to: authorize the request of applying for the multicast bearer resource after receiving the request, and send the authorized request of applying for the multicast bearer resource to an Access-Resource and Admission Control Function, A-RACF; and
the A-RACF, adapted to exercise authorization and admission control over the multicast bearer resource corresponding to the request.

28. The system of claim 27, wherein the system further comprises a Resource Control Enforcement Function, RCEF;
the A-RACF is adapted to: send a multicast stream control policy of a multicast stream to the RCEF, wherein the policy instructs the RCEF to exercise at least one of resource reservation control, bandwidth restriction control, resource activation control, access authorization control; and
the RCEF is adapted to install and execute the multicast stream control policy.

29. The system of claim 27, wherein the system further comprises a Border Gateway Function, BGF;
the SPDF is adapted to: send a multicast stream control policy of a multicast stream to the BGF, wherein the policy instructs the BGF to exercise at least one of resource reservation control, bandwidth restriction control, resource activation control; and
the BGF is adapted to install and execute the multicast stream control policy.

30. The system of claim 27 or 29, wherein the system further comprises an Application Function, AF;
the A-RACF is adapted to return a result of performing authorization and admission control for the multicast bearer resource corresponding to the request to the SPDF;
or,
the A-RACF is adapted to return a result of exercising authorization and admission control over the multicast bearer resource corresponding to the request to the SPDF;
the BGF is adapted to return a result of executing the multicast stream control policy to the SPDF; and
the SPDF is adapted to return a result of the request of applying for the multicast bearer resource to the AF according to the received results.

31. The system of claim 27, wherein the system further comprises a Resource Control Enforcement Function, RCEF;
the RCEF is adapted to: receive a request of joining a multicast group from a User Equipment, UE, wherein the request carries a multicast stream identifier, request a multicast stream control policy of a multicast stream from the A-RACF, and install and execute the multicast stream control policy; and
the A-RACF is adapted to send the multicast stream control policy of the multicast stream to the RCEF.

32. The system of claim 31, wherein the system further comprises a Border Gateway Function, BGF;
the RCEF is adapted to: send a multicast path setup request carrying a multicast stream identifier to the BGF;
the BGF is adapted to: receive the multicast path setup request, request the multicast stream control policy of the multicast stream from the SPDF, and install and execute the multicast stream control policy; and
the SPDF is adapted to send the multicast stream control policy of the multicast stream to the BGF.

33. The system of claim 27, wherein the system further comprises a Multicast Control Processing Function, MCPF, in an IP edge node and/or in a core border node;
the A-RACF and/or the SPDF are adapted to: send a multicast stream control policy of a multicast stream to the MCPF in the IP edge node and/or in the core border node respectively; and
the MCPF in the IP edge node and/or in the core border node is adapted to install and execute the multicast stream control policy of the multicast stream sent by the A-RACF and the SPDF.

34. The system of claim 26, wherein the request of controlling the multicast bearer resource is a request of releasing the multicast bearer resource, and the system comprises:
a Service-based Policy Decision Function, SPDF, adapted to send the request of releasing the multicast bearer resource to an Access-Resource and Admission Control Function, A-RACF, after receiving the request of releasing the multicast bearer resource; and
the A-RACF, adapted to release the multicast bearer resource corresponding to the request after receiving the request of releasing.

35. The system of claim 34, wherein the system further comprises a Resource Control Enforcement Function, RCEF;
the A-RACF is adapted to instruct the RCEF to delete a multicast stream control policy of a multicast stream; and
the RCEF is adapted to delete the multicast stream control policy of the multicast stream according to the instruction.

36. The system of claim 34, wherein the system further comprises a Border Gateway Function, BGF;
the SPDF is adapted to instruct the BGF to delete a multicast stream control policy of a multicast stream; and
the BGF is adapted to delete the multicast stream control policy of the multicast stream according to the instruction.

37. The system of claim 34, wherein:
the system further comprises a Multicast Control Processing Function, MCPF, in an IP edge node and/or in a core border node;
the A-RACF and/or the SPDF are adapted to: instruct the MCPF in the IP edge node and/or in the core border node to delete a multicast stream control policy of a multicast stream respectively; and
the MCPF in the IP edge node and/or in the core border node is adapted to delete the multicast stream control policy of the multicast stream according to the instruction.

38. The system of claim 34, wherein:
the system further comprises an Application Function, AF;
the A-RACF is adapted to return a result of releasing the multicast bearer resource corresponding to the request to the SPDF; or
the A-RACF is adapted to return the result of releasing the multicast bearer resource corresponding to the request to the SPDF, and, the BGF is adapted to send a result of deleting the multicast stream control policy of the multicast stream to the SPDF; and
the SPDF is adapted to return a result of the request of releasing the multicast bearer resource to the AF according to the received results.

39. The system of claim 26, wherein the request of controlling the multicast bearer resource is a request of modifying the multicast bearer resource; and the system comprises:
a Service-based Policy Decision Function, SPDF, adapted to authorize the request of modifying the multicast bearer resource after receiving the request, and sending the authorized request of modifying the multicast bearer resource to an Access-Resource and Admission Control Function, A-RACF; and
the A-RACF, adapted to exercise authorization and admission control over the multicast bearer resource corresponding to the request.

40. The system of claim 39, wherein:
the system further comprises a Resource Control Enforcement Function, RCEF;
the A-RACF is adapted to instruct the RCEF to modify a multicast stream control policy of a multicast stream; and
the RCEF is adapted to modify the multicast stream control policy.

41. The system of claim 39, wherein the system further comprises a Border Gateway Function, BGF;
the SPDF is adapted to instruct the BGF to modify a multicast stream control policy of a multicast stream; and
the BGF is adapted to modify the multicast stream control policy.

42. The system of claim 39, wherein the system further comprises an Application Function, AF;
the A-RACF is adapted to return a result of performing authorization and admission control for the multicast bearer resource corresponding to the request to the SPDF; or
the A-RACF is adapted to return a result of performing authorization and admission control for the multicast bearer resource corresponding to the request to the SPDF, and, the BGF is adapted to return a result of modifying a multicast stream control policy to the SPDF; and
the SPDF is adapted to return a result of the request of modifying the multicast bearer resource to the AF according to the received results.

43. The system of claim 39, wherein the system further comprises a Multicast Control Processing Function, MCPF, in an IP edge node and/or in a core border node;
the A-RACF and/or the SPDF are adapted to: instruct the MCPF set in the IP edge node and/or in the core border node to modify a multicast stream control policy of a multicast stream respectively; and
the MCPF is adapted to modify the multicast stream control policy according to the instruction.

44. An apparatus for controlling multicast bearer resources, comprising:
a receiving module, adapted to receive a request of controlling a multicast bearer resource; and
a multicast resource processing module, adapted to control the multicast bearer resource according to the received control request.

45. The apparatus of claim 44, wherein the multicast resource processing module comprises:
a multicast resource authorization function module and a control policy generating module; and the request of controlling the multicast bearer resource is a request of applying for, releasing or modifying the multicast bearer resource;
the multicast resource authorization function module is adapted to: exercise authorization and admission control over the multicast bearer resource corresponding to the applying request or the modifying request; and release the multicast bearer resource corresponding to the releasing request; and
a control policy generating module, adapted to generate a multicast stream control policy for a multicast stream corresponding to the applying request or the modifying request.

46. The apparatus of claim 45, wherein:
the multicast resource processing module further comprises: a policy sending module, adapted to send the generated multicast stream control policy.

47. The apparatus of claim 45, wherein the multicast resource processing module further comprises:
a policy request receiving module, adapted to receive a multicast stream control policy request; and
a policy sending module, adapted to send the generated multicast stream control policy.

48. The apparatus of claim 44 or 45, wherein:
the apparatus further comprises a policy master decision module, adapted to send a result of processing the request of controlling the multicast carrier resource to an Application Function, AF.

49. An apparatus for controlling multicast bearer resources, comprising:
a receiving module, adapted to receive a multicast stream control policy or an instruction of modifying or deleting the multicast stream control policy; and
a Multicast Control Processing Function, MCPF, module, adapted to: install and execute the multicast stream control policy, or modify or delete the multicast stream control policy.

50. The apparatus of claim 49, further comprising:
a multicast policy requesting module, adapted to request the multicast stream control policy.
